# EUROPÄISCHE PATENTSCHRIFT

(11) **EP 3 291 965 B1**
(45) Veröffentlichungstag und Bekanntmachung des Hinweises auf die Patenterteilung: **24.10.2018**
(21) Anmeldenummer: 16721769.4
(22) Anmeldetag: 03.05.2016
(51) Int. Cl.: B29C 65/20, E06B 3/96

(54) **VERFAHREN UND VORRICHTUNG ZUM VERBINDEN VON PROFILTEILEN**
METHOD AND DEVICE FOR CONNECTING PROFILE PARTS
PROCÉDÉ ET DISPOSITIF POUR RELIER DES PIÈCES PROFILÉES

(30) Priorität: 07.05.2015 DE 102015107121
(43) Veröffentlichungstag der Anmeldung: 14.03.2018
(73) Patentinhaber: Rotox Besitz- und Verwaltungsgesellschaft mbH, 65611 Brechen (DE)
(72) Erfinder: SCHMITTINGER, Guido, 56850 Hahn (DE); EISENBACH, Bernd, 65611 Brechen (DE); DAUN, Winfried, 56858 Grenderich (DE); DENK, Christian, 66996 Schönau (DE)
(74) Vertreter: Müller, Eckhard
(86) Internationale Anmeldenummer: PCT/EP2016/059870
(87) Internationale Veröffentlichungsnummer: WO 2016/177715

(56) Entgegenhaltungen:
- DE-A1- 2 201 656
- DE-U1-202015 000 908
- JP-A- 2001 301 040

## Beschreibung

Die Erfindung betrifft ein Verfahren zum Verbinden von Kunststoffprofilteilen mit den Merkmalen des Oberbegriffs von Anspruch 1, wobei wenigstens ein Profilteil an einem zugeordneten Profilträger gehalten und eine Heizfläche eines Heizelementes in einer Fügerichtung miteinander in Kontakt gebracht werden, um das wenigstens eine Profilteil in seinem Schweißbereich vor einem Zusammenfügen mit dem anderen Profilteil zumindest anzuschmelzen, wobei ein an dem Profilteil anliegendes Begrenzungselement vorgesehen ist, welches ein Fließen und Verformen des zumindest angeschmolzenen Profilteils kontrolliert. Die Erfindung betrifft auch eine Vorrichtung mit den Merkmalen des Oberbegriffs von Anspruch 9, welche zur Durchführung des Verfahrens eingerichtet ist.

Verfahren und Vorrichtungen der eingangs genannten Art werden insbesondere zum Verschweißen von PVC-Profilstäben zu Fensterrahmen oder Türrahmen verwendet. Dazu werden die Profilstäbe vor dem Verschweißen auf die jeweils erforderliche Länge abgelängt und, sofern erforderlich, auf Gehrung geschnitten, um die Profilteile anschließend an den Schnittflächen, also an den Gehrungsschnittflächen durch Verschweißen zu verbinden.

Das eigentliche Verschweißen der Profilteile erfolgt durch Anschmelzen und anschließendes Fügen der Verbindungsflächen an den Profilstabenden. Hierzu werden die zu verschweißenden Profilteile zunächst in eine entsprechende Vorrichtung eingelegt und mit Hilfe von Anschlägen und Führungen positioniert. Daraufhin werden die Verbindungsflächen für den sogenannten Angleich- und Anwärmprozess in einer Fügerichtung gegen die Heizfläche des Heizelementes gedrückt, wobei Material an der Verbindungsfläche, also im Schweißbereich geschmolzen wird. Nach dem Erwärmen folgt das Umstellen und Fügen, wobei das Heizelement zwischen den Profilteilen entfernt wird. Abschließend werden die Profilteile mit den angeschmolzenen Verbindungsflächen, also dem angeschmolzenen Schweißbereich in Fügerichtung aufeinander zubewegt, also gegeneinander gepresst, wobei sich der noch heiße, thermoplastische Werkstoff der beiden Profilstabenden derart verbindet, dass eine stabile Schweißverbindung entsteht. Ein solches Vorgehen ist zum Beispiel einleitend in der DE 10 2012 112 533 A1 erwähnt.

In der DE 10 2012 112 533 A1 finden auch Parallelschub- und Diagonalschubverfahren Erwähnung. Bei dem Parallelschubverfahren bewegen sich die anzuschmelzenden Gehrungs- bzw. Verbindungsflächen während des Schmelzprozesses von beiden Seiten gleichmäßig auf die Heizflächen des mittig feststehenden Heizelementes zu, wobei die Bewegung der Profilteile beispielsweise gegenläufig und senkrecht zu den Gehrungsschnittflächen oder senkrecht zur Längsachse des Profilteils erfolgen kann. Bei dem Diagonalschubverfahren dagegen ist eines der Profilteile feststehend positioniert, während sowohl das andere Profilteil als auch das Heizelement in Längsrichtung des feststehenden Profilteils bewegt wird.

Die Fügepartner selbst sind um den sogenannten Abbrand länger als das spätere Fertigmaß der verbundenen Elemente. Ein Teil dieses Abbrandes wird von dem Heizelement abgeschmolzen, ein anderer Teil wird in einem nächsten Schritt gefügt (gestaucht). Dieses Verhältnis des Abschmelzens und Stauchens des Abbrandes ist variabel. Auch der Abbrand selbst kann unterschiedlich sein.

Während des eigentlichen Abschmelzprozesses beginnt das PVC zu fließen und verformt sich, hierbei bewegt sich die Schmelze nach innen in die Profilkammern und nach außen auf die Ansichtsflächen des PVC-Profils. Um dieses Fließen und Verformen nach außen, also auf die Sichtflächen zu kontrollieren, wird das Profil mit Begrenzungselementen, wie z.B. Begrenzungsmessern eingeengt (begrenzt). Dieses Begrenzungselement ist jedoch bekannter Weise bei dem Schweißprozess selbst unbeweglich mit den Profilträgern verbunden. Die Begrenzungselemente selbst können zwar eng eingestellt werden, jedoch kommen sie nicht in Kontakt mit dem Profilanschlag und dem Heizelement, somit bleibt immer ein definierter Spalt, in den die Schmelze fließen kann. Diese nach außen gedrückte Schmelze erstarrt im anschließenden Fügeprozess, so dass sich eine Schweißraupe bildet. Nach einer gewissen Abkühlzeit muss diese Schweißraupe in Nachfolgemaschinen (Verputzmaschinen) entfernt werden. Dies kann auf verschiedene Arten, wie Nuten oder bündig Abstechen geschehen.

Das Entfernen der Schweißraupe ist jedoch bei manuellem Vorgehen aber auch bei maschinellem Vorgehen sehr zeit- und kostenintensiv.

Aus der DE 20 2015 000 908 U ist Vorrichtung zum Verschweißen zweier Kunststoffprofile bestehend aus zwei für den Schweißvorgang in Pressrichtung relativ gegeneinander bewegbaren Spanneinheiten bekannt. Die Spanneinheiten nehmen jeweils zwischen einer unteren und oberen Begrenzungsplatte mit einer unter Gehrung verlaufenden Presskante ein Kunststoffprofil auf. Die Vorrichtung hat noch einen Schweißspiegel. Die Presskante ist an einer getrennten, in einer stufenartigen Ausnehmung jeder Begrenzungsplatte befindlichen Leiste ausgebildet, wobei die Leiste in der Ausnehmung der Begrenzungsplatte senkrecht in Richtung der Presskante verschiebbar geführt ist. Die Presskante ragt in der Grundstellung der Leiste über die Vorderkante der Begrenzungsplatte hinaus, und ist bei der Einleitung des Schweißvorganges in Pressrichtung gegen eine Kraft verschiebbar ausgebildet. Die Begrenzungsplatte ist demnach aus einem starren Teilelement und einem lediglich in der Ebene des starren Teilelementes beweglichen Teilelement gebildet, wobei das bewegliche Teilelemente an Stiften geführt gegen eine Federkraft in Richtung zum starren Teilelement gedrängt wird, wenn die aufgeschmolzenen Profilteilenden gegeneinander gedrückt werden. So könne während des Schweißens ein spaltfreier Zustand zwischen den Presskanten der Leisten erreicht werden. Jedoch ragen die Leisten nur mit einem fixen, individuell vorzugebenden Maß über die Gehrungskante der Begrenzungsplatten hinaus, wobei dieses vorzugebende Maß mit dem vorgegeben Pressweg bei der Schweißung übereinzustimmen hat. Insofern muss für jeden Pressweg auch eine individuell herzustellende Begrenzungsplatte erzeugt werden. So ist ein immenser Aufwand auch hinsichtlich der Lagerhaltung an vorzuhaltenden Begrenzungsplatten, welche den individuellen Schweißaufgabe gerecht werden können unvermeidbar. Auch die immensen Kosten zur Herstellung der jeweils individuell herzustellenden Begrenzungsplatte sind nicht vernachlässigbar.

Die US 6,273,988 B1 offenbart ein Verfahren und eine Vorrichtung zum Verbinden von Kunststoffprofilteilen, wobei jedes Profilteil in unteren und oberen Werkzeugeinheiten gehalten ist. Der oberen und unteren Werkzeugeinheit ist jeweils eine Platte zugeordnet, welche jeweils relativ beweglich an der jeweiligen oberen oder unteren Werkzeugeinheit montiert ist. Die zur betrefflichen Werkzeugeinheit relativ bewegliche Platte ist in Richtung zu einer in derselben Ebene gegenüberliegenden Platte verschiebbar, so dass deren Kanten an einer Heizfläche eines Schweißspiegels anliegen. Ist der Schweißspiegel entfernt, werden die gegenüberliegenden Platten bei dem Schweißprozess mit ihren Kanten zur Anlage gebracht, so dass ein Ausbilden einer Schweißwulst vermeidbar sein soll, da die Platten den Schweißbereich quasi abdichten.

Um eine auf die Sichtflächen aufstehende Schweißraupe zu verhindern, schlägt die WO 2013/132406 A1 vor, dass die Verbindungsflächen der Profilteile vor dem Schweißen profiliert werden. So wird vorgeschlagen, die Stirnkanten der Profilteile mittels Fräsen mechanisch zu bearbeiten, so dass die einander gegenüberliegenden Verbindungsflächen beispielsweise stufenförmig ausgeführt sind. Bei dem Verbinden bildet sich so eine relativ groß dimensionierte, nach außen geöffnete Kammer. So könne nach dem Verbinden der Profilteile eine Nut an den Sichtflächen erzeugt werden, ohne dass eine mechanische Nachbearbeitung erforderlich sei. Um zu vermeiden, dass trotzdem eine nach außen gerichtete Schweißwulst entsteht, ist noch eine Drückvorrichtung vorgesehen. Die Drückvorrichtung ist transversal, also quer zur Längsrichtung der Profilteile und ihrer aufeinander zu orientierten Fügerichtung bewegbar, und kann auch beheizt sein. Bei dem Schweißen und Fügen, also Stauchen entsteht jedoch trotzdem eine Schweißraupe, welche aber durch die Anwesenheit der Drückvorrichtung in ihrem Volumen begrenzt und geglättet wird. Die Drückvorrichtung bestimmt also den Füllungsgrad der Kammer. Mit anderen Worten hält die Drückvorrichtung das Material des entstehenden Schweißwulstes in der Kammer und glättet die Schweißwulst innerhalb der Kammer auf ein vorher festgelegtes Niveau. Dieses Niveau kann unterhalb der Außensichtfläche der Profilteile angeordnet sein, so dass die angesprochen Nut entsteht.

Das geglättete Schweißraupenvolumen kann aber auch Niveaugleich zu den Außensichtflächen sein. Erkennbar ist, dass bei der WO 2013/132406 A1 ein so großer Materialbetrag zur Herstellung der Kammer abgetragen werden muss, dass sich das Material des entstehenden Schweißwulstes in dem Volumen der Kammer verteilen lässt. Bei dem mechanischen Bearbeiten entstehen jedoch Späne, welche mittels komplizierter Einrichtungen aus dem Schweißbereich entfernt werden müssen. Obwohl die einzelnen Schritte, auch das mechanische Bearbeiten der Stirnkanten und auch das Hineindrücken und Verteilen des Schweißwulstmaterials innerhalb der Kammer von der bestimmten Schweißmaschine durchgeführt werden können, wird insofern durch diese besonderen Maßnahmen also kein Zeit- und/oder Kostenvorteil erreicht. Denn anstelle der Nachbearbeitung zum Entfernen der Schweißraupe werden die Profilteile vor dem Schweißen zeit- und kostenintensiv in der Schweißmaschine selbst bearbeitet. Auch der erhebliche Materialabtrag zum Herstellen der Kammer ist nachteilig. Denn das Volumen der Kammer muss zumindest das Materialvolumen der Schweißraupe aufnehmen können. Insofern ist bezüglich des anfallenden Materialabtrages hinsichtlich der ursprünglich zu entfernenden Schweißraupe im Vergleich zum Materialabtrag zum Herstellen der Kammer wohl keine Reduzierung erreicht.

In der DE 101 02 058 A1 wird bei einer Vorrichtung zum Verschweißen von Kunststoffprofilen, deren zu verschweißende Schnittflächen formschlüssig aneinander anschließen, vorgeschlagen, wenigstens zwei Formteile aus Metall vorzusehen, welche die zu verschweißenden Profile im Bereich der Schweißnaht abdecken und im Bereich der Schweißnaht formschlüssig zur Oberfläche des Profils ausgebildet sind, wobei die Profile relativ zu den Formteilen unter Wahrung des Formschlusses mit den Formteilen bewegbar sind.

Ein Verfahren entsprechend dem Oberbegriff des Patentanspruchs 1 und eine Vorrichtung nach dem Oberbegriff des Patentanspruchs 9 sind aus der DE 196 44 183 A1 bekannt.

Allerdings ist auch bei den Vorrichtungen und Verfahren der beiden letzgenannten Druckschriften ein Nachbearbeiten des Schweißbereiches notwendig.

Aus der DE 2 201 656 A1 ist ein Verfahren und eine Vorrichtung zum Verschweißen von Kunststoffprofilen bekannt, welche in verschiebbare und einander annäherbare Einspannvorrichtungen einer Schweißvorrichtung eingespannt werden. Zwischen die zu verschweißenden Stoßflächen der Profile wird ein Schweißspiegel zur Erwärmung der zu verschweißenden Bereiche eingebracht, wobei die Enden der Kunststoffprofile mit den zu verschweißenden Stoßflächen während der gesamten, den Schweißvorgang ausmachenden Verfahrensschritte, also bei Heranführung an den Schweißspiegel, bei der anschließenden Annährung nach Ausschwenken des Schweißspiegels und beim Zusammenpressen der Stoßflächen vollständig und ohne zeitweise Bildung eines Überstandes vom Formkopf der Einspannvorrichtung umschlossen werden. Die bekannte Vorrichtung weist einen das Ende des Kunststoffprofiles mit der zu verschweißenden Stoßfläche umschließenden Formkopf auf, der in Verschubrichtung der Einspannvorrichtung relativ gegenüber verschiebbar ist. Dabei steht der Formkopf unter der Rückstellkraft von Rückstellfedern.

Die Aufgabe der Erfindung besteht darin, ein verbessertes Verfahren und eine verbesserte Vorrichtung zum Verbinden von Kunststoffprofilteilen bereitzustellen, wobei auch der Austritt der Schmelze kontrollierbarer und eine Formgebung des Schweißbereiches bei dem Verbinden selbst beeinflussbar sein kann, so dass ein Nachbearbeiten völlig oder zumindest teilweise entfallen kann.

Die Aufgabe wird durch ein Verfahren mit den Merkmalen des Anspruchs 1 und eine Vorrichtung mit den Merkmalen des Anspruchs 9 gelöst. Vorteilhafte Ausgestaltungen der Erfindung sind Gegenstand der Unteransprüche.

Bei dem erfindungsgemäßen Verfahren ist vorgesehen, dass das Begrenzungselement zumindest ein Anlageelement und ein Formteil aufweist, welche sowohl zueinander als auch zu dem Profilteil bewegbar sind, wobei das Anlageelement zusammen mit dem Formteil bei einem Abschmelzen des zumindest einen Profilteils aus einer Ruheposition in Richtung zu einer Arbeitsposition relativ zu dem zumindest einen Profilteil und dem Heizelement bewegt wird ,wobei zumindest das Formteil zumindest bei dem Abschmelzen in Kontakt mit der Heizfläche des Heizelementes und das Anlageelement in Kontakt zu einer Profiloberfläche gehalten wird.

Ein Abschmelzprozess ist im Sinne der Erfindung der Zeitraum vom Schmelzbeginn während des An- bzw. Abschmelzens bis zum Schmelzende. Bei den Kunststoffprofilteilen handelt es sich bevorzugt um PVC-Elemente, welche miteinander zu Fenster- oder Türrahmen verbunden werden.

Ist das Abschmelzen beendet, wird das Heizelement entfernt. Um zu vermeiden, dass das Schmelzgut in Richtung zur Außensichtfläche des zumindest einen Profilteils fließen kann, ist vorgesehen, dass das relativ bewegliche Begrenzungselement, also das Anlageelement zusammen mit dem Formteil bei einem Umstellen vom Schmelzen zum Stauchen horizontal in Richtung zu seiner Arbeitsposition so bewegt wird, dass das relativ bewegliche Begrenzungselement, also das Anlageelement, zusammen mit dem Formteil eine freie Stirnkante des zumindest einen Profilteils überragt, so dass eine Halteebene für das Schmelzgut gebildet ist. Dadurch, dass das relativ bewegliche Begrenzungselement, also das Anlageelement mit seiner Oberfläche an der Profiloberfläche anliegt, wird die entsprechende Schmelzgutoberfläche vorteilhaft niveaugleich mit der Profiloberfläche gehalten.

Mit dem erfindungsgemäßen Verfahren wird ein Austreten der Schmelze nach außen, also auf die Außensichtflächen der Profilteile unterbunden, wobei starre Begrenzungselemente entfallen können. Vorteilhaft können der Schweißtisch, die Spannplatten, also die Profilträger und/oder Außen- und Innenwerkzeuge, also quasi alle mit dem zumindest einen Profilteil direkt in Kontakt stehenden Elemente eine Relativbewegung zu den Fügepartnern abhängig von der Eigenbewegung des Schweißtisches, also des Profilträgers ausführen. So wird erreicht, dass die relativ beweglichen Begrenzungselemente, also das Anlageelement zusammen mit dem Formteil auch bei dem Einrichten, also während des Positionierens der Fügepartner an einem Profilanschlag, und während des Abschmelzens, also bei dem Erzeugen von Schmelzgut und dem Nachwärmen mittels des Heizelementes stets direkten Kontakt mit dem Profilanschlag und der Heizfläche des Heizelementes haben. Die Relativbewegung zwischen den Fügepartnern und des relativ beweglichen Anlageelements zusammen mit dem Formteil wird auch während des Abschmelzprozesses bewirkt, indem die Fügepartner mittels der Schweißtische, also mittels der Profilträger aufeinander zu bewegt werden, wobei die relativ beweglichen Anlageelemente zusammen mit dem Formteil dieses Abschmelzen kompensieren, also nicht nur in Fügerichtung bewegt werden, sondern auch entgegen der Fügerichtung bewegt werden können, also zum Ausgleich des Schmelzweges zurückbewegt werden.

Zweckmäßig ist daher vorgesehen, wenn das Begrenzungselement, also das Anlageelement zusammen mit dem Formteil in einer Horizontalrichtung, also parallel zur Oberfläche des zumindest einen Profilteils bewegt wird.

Um ein Fließen des Schmelzgutes in einen Spalt zwischen der Profiloberfläche und der korrespondierenden Oberfläche des relativ beweglichen Begrenzungselementes, also des Anlageelement zusammen mit dem Formteil zu vermeiden, liegt das bewegliche Anlageelement mit seiner Oberfläche bevorzugt spaltfrei an der Profiloberfläche an.

Vordem eigentlichen Schweiß- also Verbindungsprozess kann das Einrichten vorgesehen sein, wobei das zumindest eine Profilteil in Kontakt mit dem Profilanschlag gebracht wird. Vorteilhaft ist vorgesehen, dass das relativ bewegliche Begrenzungselement, also das Anlageelement zusammen mit dem Formteil bei dem Einrichten horizontal in seine Arbeitsposition bewegt und in Kontakt mit dem Profilanschlag gebracht wird. So wird nicht nur das Profilteil ausgerichtet, sondern zugleich auch die relevante Position, des relativ beweglichen Begrenzungselementes, also des Anlageelements zusammen mit dem Formteil festgelegt.

Nach dem Einrichten wird der Profilanschlag entfernt, wobei das Heizelement zum Einsatz gebracht wird. Das zumindest eine Profilteil wird dabei in Kontakt mit der Heizfläche des Heizelementes gebracht. Durch das Einrichten ist auch das Begrenzungselement, also das Anlageelement zusammen mit dem Formteil zweckmäßiger Weise ausgerichtet und liegt an dem Gehrungsschnitt an. Günstiger Weise ist dabei vorgesehen, dass das relativ bewegliche Begrenzungselement, also das Anlageelement zusammen mit dem Formteil ebenfalls vor einem Schmelzbeginn horizontal bewegt in Kontakt mit der Heizfläche des Heizelementes gebracht werden kann.

Zielführend ist, wenn das relativ bewegliche Begrenzungselement, also das Anlageelement zusammen mit dem Formteil bei dem Abschmelzen des zumindest einen Profilteils, also bei dem Abschmelzen dessen Schweißbereiches bis zum Schmelzende entsprechend dem Schmelzweg aus der Arbeitsposition zurück in Richtung zur Ruheposition bewegt wird, so dass der Schmelzweg von dem relativ beweglichen Begrenzungselement, also des Anlageelements zusammen mit dem Formteil ausgeglichen wird, wobei das relativ bewegliche Begrenzungselement zumindest mit seinem Formteil in Kontakt mit der Heizfläche des Heizelementes verbleibt. Das Schmelzgut ist durch die Anwesenheit des relativ beweglichen Begrenzungselementes, also des Anlageelements zusammen mit dem Formteil an einer Bewegung in Richtung zur Außensichtflache des zumindest einen Profilteils gehindert.

Mit dem angeschmolzenen Schweißbereich wird das eine Profilteil in Richtung zum anderen oder beide Profilteile jeweils in Fügerichtung aufeinander zu bewegt.

Jeder Profilträger weist zweckmäßiger Weise jeweils zumindest ein relativ bewegliches Begrenzungselement, also jeweils das Anlageelement zusammen mit dem Formteil auf. Vorteilhaft ist, wenn das jeweilige relativ bewegliche Begrenzungselement, also das Anlageelement zusammen mit dem Formteil mit Beginn des Stauchens zunächst in der jeweiligen Arbeitsposition, die jeweilige Halteebene bildend, verbleibt, wobei einander gegenüberliegende Begrenzungselemente, also dessen jeweilige Formteile mit ihrer jeweils freien Stirnseite oder Anlagenfläche aneinander liegen. Die Halteebene wird mit dem Fortschritt des Aufeinander zu Bewegens der zu fügenden Profilteile verkleinert. Liegen die Schweißbereiche der zu verbindenden Profilteile aneinander, weist die Halteebene den Betrag NULL auf, wobei die jeweils freien Stirnseiten oder Anlageflächen der jeweiligen Formteile in Kontakt verbleiben. Mit zunehmendem Stauchen werden die jeweiligen relativ beweglichen Begrenzungselemente, also das jeweilige Anlageelement zusammen mit dem Formteil entsprechend dem Stauchweg bewegt, wobei die jeweils freien Stirnseiten oder Anlagenflächen der jeweiligen Formteile zumindest bis zum Beenden des Stauchens mit einander in Kontakt verbleiben. Das Schmelzgut ist durch die Anwesenheit des relativ beweglichen Begrenzungselementes, also des Anlageelements zusammen mit dem Formteil auch beim Stauchen an einer Bewegung in Richtung zur Außensichtflache des zumindest einen Profilteils gehindert. Dadurch, dass das relativ bewegliche Begrenzungselement, also das Anlageelement mit seiner Oberfläche auch beim Stauchen an der Profiloberfläche anliegt, wird die betreffliche Schmelzgutoberfläche auch beim Stauchen vorteilhaft niveaugleich mit der Profiloberfläche gehalten.

Zweckmäßig im Sinne der Erfindung ist, wenn das jeweiligen Profilteil im betrefflichen Schweißbereich beim oder bevorzugt nach dem Stauchen zusätzlich noch profiliert wird. Damit kann eine Nachbearbeitung zum Herstellen einer Nut entfallen. In einer bevorzugten Ausgestaltung sind das Anlageelement und das Formteil jeweils auf einer Gleitfläche relativ zueinander beweglich geführt. Die Gleitfläche kann bevorzugt geneigt ausgeführt, weiter bevorzugt in einem Winkel von 45° zur Profiloberfläche geneigt sein.

So kann das Anlageelement bei dem Einrichten, dem Schmelzen, dem Abschmelzprozess, dem Schmelzende und dem Umstellen vom Schmelzen zum Stauchen zusammen mit dem Formteil verschoben werden.

Bei dem Umstellen vom Schweißen zum Stauchen jedoch kann das Formteil auch relativ zu dem Anlageelement in seine Arbeitsposition verschoben werden, wobei das Formteil mit einem Teilabschnitt der betreffenden Gleitfläche nunmehr die Halteebene bildet. Diese wäre dann entsprechend der Neigung der Gleitfläche geneigt, und würde die freie Stirnkante des betreffenden Profilteils schräg orientiert überragen. Die schräge Halteebene bietet den Vorteil einer weiteren Funktion, nämlich ein Abtropfen des Schmelzgutes verhindern zu können. Wenn das Formteil so verschoben wird, dass die Halteebene gebildet ist, kann das Anlageelement natürlich zurückbewegt werden.

Möglich ist aber auch, das Formteil erst bei dem Stauchen selbst, also bevorzugt am Ende des Stauchprozesses entlang der Gleitfläche das Anlageelementes schräg in Richtung zu der Arbeitsposition des Formteils so zu bewegen, dass die jeweils freien Stirnseiten oder Anlagenflächen, also Profilierungen aneinander liegend in das Schmelzgut eindringen und so eine gewünschte Nut an den Außensichtflächen der verbundenen Profilteile erzeugen, also eindrücken. Die jeweils freie Stirnseite des Formteils kann entsprechend der auszubildenden, gewünschten Nutform profiliert sein. So kann die jeweils freie Stirnseite beispielhaft spitz oder z.B. flach ausgeführt sein, ohne die möglichen Ausgestaltungen darauf zu beschränken.

Da das Profilteil beispielhaft eine vieleckige, also z.B. eine quadratische oder eine rechteckige Grundform aufweisen kann, ist es zweckmäßig im Sinne der Erfindung jeder Oberfläche des betreffenden Profilteils ein entsprechend angepasstes relativ bewegliches Begrenzungselement, also das Anlageelement zusammen mit dem Formteil zuzuordnen. Auch kann an jeder herzustellenden Ecke beispielsweises des Fensterrahmens oder des Türrahmens jeweils die entsprechende Anzahl an relativ beweglichen Begrenzungselementen zugeordnet werden, wenn z.B. eine Vierkopfschweißmaschine vorgesehen ist. Insofern weist jeder Profilträger auch ein relativ bewegliches Begrenzungselement, also das Anlageelement zusammen mit dem Formteil auf, wobei jede Oberfläche des betreffenden Profilteils einen Profilträger, oder einen Profilträgerabschnitt des Profilträgers aufweist, der auch mehreren Oberflächen zugeordnet sein kann.

Zur Bewegung des relativ beweglichen Begrenzungselementes können stufenlose Bewegungselemente, also der jeweiligen Anlageelemente und/oder der Formteile vorgesehen sein. Denkbar sind elektrische, elektromechanische, mechanische, hydraulische, elektrohydraulische, pneumatische oder elektropneumatische Antriebe. Zur Steuerung der Bewegungswege des entsprechenden relativ beweglichen Begrenzungselementes können die Antriebe mit der ohnehin vorhandenen zentralen Steuerung der Vorrichtung, also der Schweißmaschine in Verbindung stehen. Natürlich kann auch eine separate Steuerung des entsprechenden Begrenzungselementes vorgesehen sein.

Die erfindungsgemäße Vorrichtung zeichnet sich durch ein Begrenzungselement aus, dass ein Anlageelement und ein Formteil aufweist, welche sowohl zueinander als auch zu dem Profilteil relativ bewegbar sind, wobei das bewegliche Anlageelement zusammen mit dem Formteil zumindest bei einem Abschmelzen des zumindest einen Profilteils aus einer Ruheposition in Richtung zu einer Arbeitsposition relativ zu dem zumindest einen Profilteil und dem Heizelement bewegbar ist, wobei zumindest das Formteil zumindest bei dem Abschmelzen in Kontakt mit der Heizfläche des Heizelementes und das Anlageelement mit einer Profiloberfläche in Kontakt steht.

In vorteilhafter Ausgestaltung ist das relativ bewegbare Begrenzungselement, also das Anlageelement zusammen mit dem Formteil bevorzugt in einer Aufnahme aufgenommen, welche an der Vorrichtung, also an dem Profilträger angeordnet ist. Die Aufnahme ist in Richtung zur Stirnseite der Vorrichtung, also des Profilträgers geöffnet, und weist gegenüberliegend dazu eine Anschlagwand auf. Von der Anschlagwand erstreckt sich ein Basisschenkel in Richtung zur Stirnseite. Der Basisschenkel ist bevorzugt so ausgeführt, dass dessen Stirnseite nach dem Einrichten und/oder vor dem Schmelzbeginn bündig mit einer Stirnseite des relativ bewegbaren Begrenzungselementes ist. Die Dimension des Begrenzungselementes wiederum ist so ausgeführt, dass dieses mit seiner zum Profilteil orientierten Oberfläche des Anlageelementes an der Profiloberfläche und mit seiner dazu gegenüberliegenden Oberfläche des Formteils an der Basisschenkeloberfläche anliegt. So ist das Begrenzungselement quasi zwischen dem Profilteil und dem Basisschenkel relativ bewegbar und bevorzugt spaltfrei an den betrefflichen Oberflächen gelagert.

Das Begrenzungselement, also das Formteil weist in vorteilhafter Weise einen Vorsprung auf, so dass das Begrenzungselement, also das Anlageelement zusammen mit dem Formteil in der Aufnahme, also an dem Basisschenkel anliegend gehalten ist. Vorteilhaft kann das relativ bewegbare Begrenzungselement, also das Anlageelement zusammen mit dem Formteil bei einem Einrichten an dem Profilanschlag anliegen. Günstig ist, wenn das Begrenzungselement, also das Anlageelement zusammen mit dem Formteil auch schon vor dem Abschmelzprozess, also vor einem Schmelzbeginn an der Heizfläche des Heizelementes anliegt.

Zielführend ist, wenn das relativ bewegbare Begrenzungselement, also das Anlageelement zusammen mit dem Formteil bei dem Abschmelzen des zumindest einen Profilteils, also bei dem Abschmelzen dessen Schweißbereiches bis zum Schmelzende entsprechend dem Schmelzweg aus der Arbeitsposition zurück in Richtung zur Ruheposition bewegbar ist, so dass der Schmelzweg von dem relativ beweglichen Begrenzungselement ausgleichbar ist, wobei das relativ bewegbare Begrenzungselement, also das Formteil in Kontakt mit der Heizfläche des Heizelementes verbleibt. Das Schmelzgut ist durch die Anwesenheit des relativ beweglichen Begrenzungselementes, also des Anlageelements zusammen mit dem Formteil an einer Bewegung in Richtung zur Außensichtflache des zumindest einen Profilteils gehindert.

Ist das Abschmelzen beendet, wird das Heizelement entfernt. Um zu vermeiden, dass das Schmelzgut bei einem Umstellen vom Schmelzen zum Stauchen in Richtung zur Außensichtfläche des zumindest einen Profilteils fließen kann, ist zielführend vorgesehen, dass das relativ bewegbare Begrenzungselement, also das Anlageelement zusammen mit dem Formteil horizontal in Richtung zu seiner Arbeitsposition so bewegbar ist, dass das relativ bewegbare Begrenzungselement, also das Anlageelement zusammen mit dem Formteil eine freie Stirnkante des zumindest einen Profilteils überragt, so dass eine Halteebene für das Schmelzgut gebildet ist. Dadurch, dass das relativ bewegliche Begrenzungselement, also das Anlageelement mit seiner Oberfläche an der Profiloberfläche anliegt, wird die betreffliche Schmelzgutoberfläche vorteilhaft niveaugleich mit der Profiloberfläche gehalten.

Jeder Profilträger, also jedes Profilteil weist zweckmäßiger Weise jeweils zumindest ein relativ bewegbares Begrenzungselement also das jeweilige Anlageelement zusammen mit dem Formteil auf. Zweckmäßig ist, wenn das jeweilige, relativ bewegbare Begrenzungselement, also das Anlageelement zusammen mit dem Formteil mit Beginn des Stauchens zunächst in der jeweiligen Arbeitsposition die jeweilige Halteebene bildend verbleibt, wobei einander gegenüberliegende Begrenzungselemente, also einander gegenüberliegende Formteile mit ihrer jeweils freien Stirnseite oder Anlagenfläche aneinander liegen. Die Halteebene wird mit dem Fortschritt des Aufeinander zu Bewegens der zu fügenden Profilteile verkleinert. Liegen die Schweißbereiche der zu verbindenden Profilteile aneinander, weist die Halteebene den Betrag NULL auf, wobei die jeweils freien Kanten der jeweiligen relativ bewegbaren Begrenzungselemente, also der Formteile in Kontakt verbleiben. Mit zunehmenden Stauchen werden die jeweiligen relativ bewegbaren Begrenzungselemente, also das jeweilige Anlageelement zusammen mit dem Formteil entsprechend dem Stauchweg bewegt, wobei die jeweils freien Stirnseiten oder Anlagenflächen der Formteile zumindest bis zum Beenden des Stauchens mit einander in Kontakt verbleiben. Das Schmelzgut ist durch die Anwesenheit des relativ bewegbaren Begrenzungselementes auch beim Stauchen an einer Bewegung in Richtung zur Außensichtflache des zumindest einen Profilteils gehindert. Dadurch, dass das relativ bewegbare Begrenzungselement, also das Anlageelement mit seiner Oberfläche auch beim Stauchen an der Profiloberfläche anliegt, wird die entsprechende Schmelzgutoberfläche auch beim Stauchen vorteilhaft niveaugleich mit der Profiloberfläche gehalten.

Zweckmäßig im Sinne der Erfindung ist, wenn das jeweilige Profilteil im zugeordneten Schweißbereich beim Stauchen zusätzlich noch profiliert wird. Damit kann eine Nachbearbeitung zum Herstellen einer Nut entfallen. Das Anlageelement und das Formteil können jeweils auf einer Gleitfläche relativ zueinander beweglich geführt sein. Die Gleitfläche kann bevorzugt geneigt ausgeführt, weiter bevorzugt in einem Winkel von 45° zur Profiloberfläche geneigt sein. So kann das Anlageelement bei dem Einrichten, dem Schmelzen, dem Abschmelzprozess, dem Schmelzende und dem Umstellen vom Schmelzen zum Stauchen zusammen mit dem Formteil verschoben werden. Bei dem Umstellen vom Schweißen zum Stauchen jedoch kann das Anlageteil in seine Ruheposition zurückverschoben werden, wobei das Formteil dann relativ zu dem Anlageelement in seine Arbeitsposition verschoben wird und eine freie Kante des Formteils nunmehr die Halteebene bildet.

Möglich ist aber auch, das Formteil erst bei dem Stauchen selbst, also bevorzugt am Ende des Stauchprozesses entlang der Gleitfläche das Anlageelementes schräg in Richtung zu der Arbeitsposition des Formteils so zu bewegen, dass die jeweiligen Profilierungen bevorzugt aneinander liegend in das Schmelzgut eindringen und so eine gewünschte Nut an den Außensichtflächen der verbundenen Profilteile erzeugen. Die jeweilige Stirnseite des Formteils kann entsprechend der auszubildenden, gewünschten Nutform profiliert sein. So kann die jeweilige Stirnseite beispielhaft spitz oder z.B. flach ausgeführt sein, ohne die möglichen Ausgestaltungen darauf zu beschränken. Die beiden aneinander liegenden Formteile bilden mit ihrem jeweiligen Fortsatz mit der entsprechenden Profilierung also quasi einen entsprechend ausgeführten Stempel.

Da das Profilteil beispielhaft eine vieleckige, also z.B. eine quadratische oder eine rechteckige Grundform aufweisen kann, ist es zweckmäßig im Sinne der Erfindung, jeder Oberfläche, also jeder Außensichtfläche ein entsprechend angepasstes relativ bewegbares Begrenzungselement zuzuordnen. Auch kann an jeder herzustellenden Ecke beispielsweises des Fensterrahmens oder des Türrahmens jeweils die entsprechende Anzahl an relativ beweglichen Begrenzungselementen zugeordnet werden, wenn z.B. eine Vierstellen- bzw. Vierkopfschweißmaschine vorgesehen ist. Weitere Ziele, Vorteile, Merkmale und Anwendungsmöglichkeiten der vorliegenden Erfindung ergeben sich aus der nachfolgenden Beschreibung eines Ausführungsbeispiels anhand der Zeichnungen, wobei gleiche oder gleich wirkende Elemente zumeist mit denselben Bezugszeichen versehen sind.

Es hierzu zeigen
Fig. 1: einen Teilausschnitt einer Vorrichtung zum Verbinden zweier Kunststoffprofilteile, beispielhaft in einem Parallelschubverfahren und
Fig. 2 bis Fig. 6: prinzipielle Darstellungen aufeinander folgender Schritte zur Verbindung der beiden Kunststoffprofilteile aus Figur 1 mit der Vorrichtung aus Figur 1.

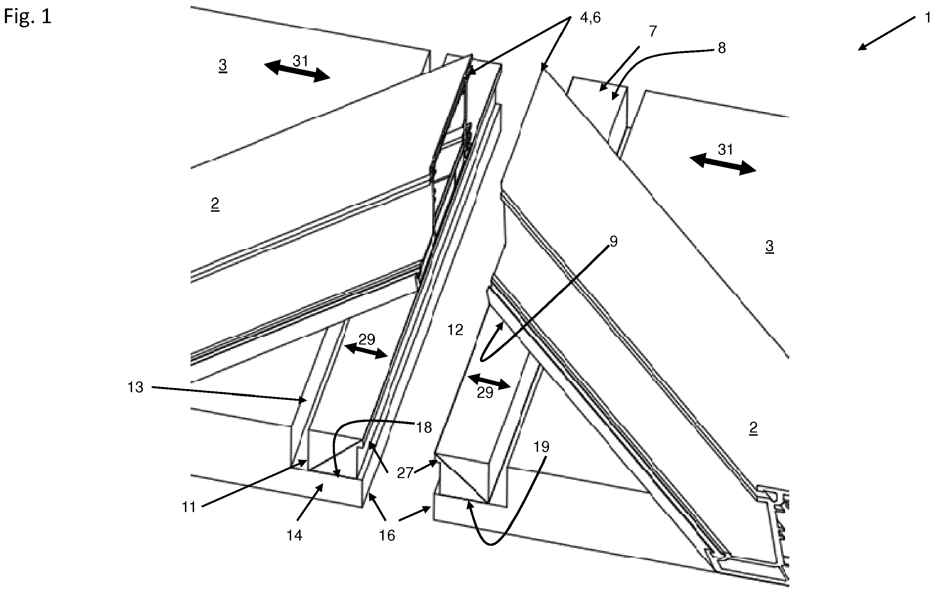

Figur 1 zeigt eine Vorrichtung 1 zum Verbinden von zwei Kunststoffprofilteilen 2, die im Folgenden als Profilteile 2 bezeichnet werden, welche beispielhaft aus PVC gebildet sind. Die Vorrichtung 1 weist Profilträger 3, eines nicht weiter dargestellten Schweißtisches und nicht erkennbare Spannbacken sowie andere bekannte Teilvorrichtungen auf. Jeder Profilträger 3 trägt jeweils ein Profilteil 2, wobei jeder Oberfläche des Profilteils 2 ein Profilträger 3 oder ein Profilträgerabschnitt zugeordnet ist, so dass das Profilteil 2 in Umfangsrichtung gesehen vollumfänglich geführt und gehalten ist. In den Figuren ist sowohl in der rechten als auch in der linken Zeichnungsebene lediglich ein Profilträger 3 dargestellt. Das jeweilige Profilteil 2 weist an seiner jeweils freien Stirnkante 4 einen Gehrungsschnitt 6 auf, die einander korrespondieren. Mit der Vorrichtung 1 können zum Beispiel Fenster- oder Türrahmen hergestellt werden.

Die Vorrichtung 1 weist zumindest ein relativ zu dem jeweiligen Profilteil 2 bewegbares Begrenzungselement 7 auf. Das bewegbare Begrenzungselement 7 liegt mit seiner Oberfläche 8 an der zugeordneten Profiloberfläche 9 an. In Figur 1 ist das Begrenzungselement 7 in einer beispielhaften Ruheposition dargestellt. Das in Figur 1 dargestellte Begrenzungselement 7 ist zweistückig ausgeführt, und weist bei dem hier gewählten Ausführungsbeispiel eine quaderförmige Ausführung auf.

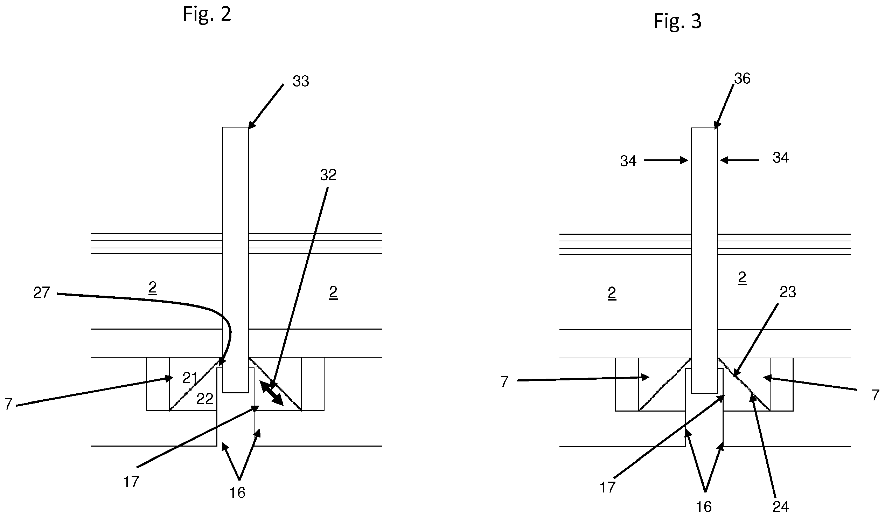

Das relativ bewegbare Begrenzungselement 7 ist in einer Aufnahme 11 aufgenommen, welche an der Vorrichtung 1, also wie in Figur 1 erkennbar, an dem Profilträger 3 angeordnet ist. Die Aufnahme 11 ist in Richtung zu einer Stirnseite 12 des Profilträgers 3 geöffnet und weist gegenüberliegend dazu eine Anschlagwand 13 auf. Von der Anschlagwand 13 erstreckt sich ein Basisschenkel 14 in Richtung zur Stirnseite 12. Der Basisschenkel 14 ist bevorzugt so ausgeführt, dass dessen Stirnseite 16 nach einem Einrichten (Figur 2) und/oder vor einem Schmelzbeginn (Figur 3) bündig mit einer Stirnseite 17 des relativ bewegbaren Begrenzungselementes 7 ist. Die Dimension des Begrenzungselementes 7 wiederum ist so ausgeführt, dass dieses mit seiner zum Profilteil 2 orientierten Oberfläche 8 an der Profiloberfläche 9 und mit seiner dazu gegenüberliegenden Oberfläche 18 an der Basisschenkeloberfläche 19 anliegt. So ist das Begrenzungselement 7 zwischen dem Profilteil 2 und dem Basisschenkel 14 relativ bewegbar und bevorzugt spaltfrei an den betrefflichen Oberflächen 9, 19 gelagert. Beispielhaft kann das Begrenzungselement 7 quaderförmig, plattenartig oder dreieckig ausgeführt sein, ohne die geometrischen Ausgestaltungen darauf zu beschränken.

In der beispielhaften Ruheposition ist die Stirnseite 17 des Begrenzungselementes 7 beabstandet zur Stirnseite 16 des Basisschenkels 14. Auch zur Anschlagwand 13 ist das Begrenzungselement 7 beabstandet. Natürlich kann das Begrenzungselement 7 auch an der Anschlagwand 13 anliegen, wenn sich dieses in der Ruheposition befindet.

Wie in den Figuren 1 bis 6 erkennbar, ist das Begrenzungselement 7 zweiteilig ausgeführt und weist ein Anlageelement 21 und ein Formteil 22 auf, welche relativ zueinander bewegbar sind.

Das Anlageelement 21 hat eine im Wesentlichen dreieckige Struktur, wobei dessen Basisfläche 23 als Gleitfläche für das Formteil 22 ausgeführt sein kann. Das Formteil 22 hat ebenfalls eine im Wesentlichen dreieckige Struktur, wobei dessen Grundfläche 24 als zur Basisfläche 23 korrespondierende Gegengleitfläche ausgebildet sein kann. Die einander korrespondierenden Flächen 23 und 24 sind, wie in Figur 1 erkennbar, schräg verlaufend, also bevorzugt in einem Winkel von 45° zur Profiloberfläche 9 angeordnet. Die Winkelangabe ist natürlich nur beispielhaft und keinesfalls als einschränkend zu verstehen.

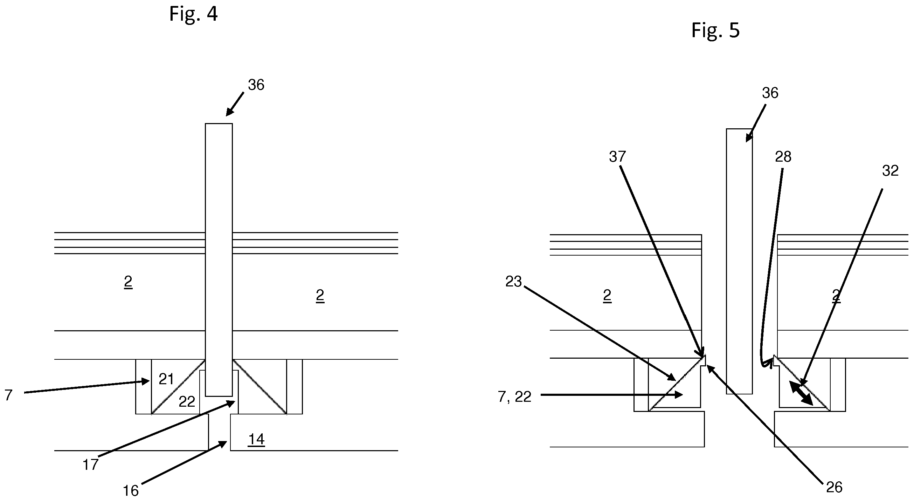

Weiter weist das Formteil 22 an seiner Stirnseite 17, welche der Stirnseite des Begrenzungselementes 7 entspricht, eine Profilierung 26 (Figur 5) auf. Beispielhaft ist diese jeweils spitz zulaufend, wobei die Stirnseite 17 einen Vorsprung 27 aufweist. Mit dem Vorsprung 27 wird gewährleistet, dass das Begrenzungselement 7 in Kontakt mit der Basisschenkeloberfläche 19 bleibt, wie den Figuren 2 bis 4 jeweils entnehmbar ist. Günstiger Weise ist der Vorsprung 27 natürlich auch an dem einteilig ausgeführten Begrenzungselement 7 angeordnet, wie der Figur 1 entnehmbar ist. Die Profilierung 26 kann natürlich auch abgeplattet, also quasi stempelartig ausgeführt sein. Die Ausgestaltung hängt von der zu erstellenden Nutform ab. Erkennbar sind einander korrespondierende Anlageflächen 28 der jeweiligen Formteile 22, an welchen sich die jeweiligen Formteile 22 spaltfrei aneinander anlegen können.

Das bewegbare Begrenzungselement 7 ist, wie in Figur 1 erkennbar, in einer Horizontalrichtung (Doppelpfeil 29) parallel aber unabhängig zur Bewegung der jeweiligen Profilträger 3 (Doppelpfeil 31) jeweils an diesem gelagert. Erkennbar ist dabei die an der Profiloberfläche 9 anliegende Oberfläche 8, wobei dazu gegenüberliegend eine genügende Lagerung an dem Basisschenkel 14 ausreicht, weshalb der Vorsprung 27 entsprechend ausgeführt ist.

In Figur 1 ist beispielhaft ein Parallelschubverfahren zum Verbinden der Profilteile 2 angedeutet, was durch die beiden Doppelpfeile 31 erkennbar ist. Die beiden Elemente des Begrenzungselement 7, also das Anlageelement 21 und das Formteil 22 sind relativ zueinander beweglich, was mittels des Doppelpfeils 32 angedeutet ist (Figuren 2, 5 und 6).

In Figur 2 ist ein Einrichten der Vorrichtung 1 dargestellt, wobei die beiden Profilteile 2 jeweils in Kontakt mit einem Profilanschlag 33 gebracht werden. Wie erkennbar wird das jeweils relativ bewegbare Begrenzungselement 7 bei dem Einrichten horizontal in seine Arbeitsposition bewegt und in Kontakt mit dem Profilanschlag 33 gebracht. Dabei ist die Stirnseite 17 des Begrenzungselementes 7, also dessen Formteils 22 bündig mit der Stirnseite 16 des Basisschenkels 14. Die Anlagefläche 28 des Formteils 22 ist bündig mit der jeweiligen Stirnkante 4 des jeweiligen Profilteils 2. Die Anlagefläche 28 des Formteils 22 liegt an dem Profilanschlag 33 an.

Ist das Einrichten beendet, folgt der Einsatz eines Heizelementes 34, welches beidseitig eine Heizfläche 36 aufweist. Bei einem Schmelzbeginn (Figur 3) werden beide Profilteile 2 in Kontakt mit der Heizfläche 34 des Heizelementes 36 gebracht. Auch das relativ bewegbare Begrenzungselement 7, also das Anlageelement 21 zusammen mit dem Formteil 22 kann vor einem Schmelzbeginn, horizontal bewegbar, in Kontakt mit der Heizfläche 34 des Heizelementes 36 gebracht werden. Dabei ist die Stirnseite 17 des Begrenzungselementes 7, also dessen Formteil 22 bündig mit der Stirnseite 16 des Basisschenkels 14. Die Anlagefläche 28 des Formteils 22 ist bündig mit der jeweiligen Stirnkante 4 des jeweiligen Profilteils 2. Die Anlagefläche 28 des Formteils 22 liegt an der Heizfläche 34 an.

Das Abschmelzen kann beginnen. Bei dem Abschmelzen werden die Stirnkanten 4 der beiden Profilteile 2 angeschmolzen. Bei dem Anschmelzen bleiben die an der Heizfläche 34 anliegenden Anlageflächen 28 des Formteils 22 in Kontakt mit der jeweiligen Heizfläche 34. Dabei werden die Profilteile 2 jeweils gegen die Heizfläche 34 gedrückt. Dieser Schmelzweg wird von dem bewegbaren Begrenzungselement 7 ausgeglichen, indem dieses jeweils in Richtung zur Anschlagwand 13 bewegt wird.

Bei der Erfindung ist das bewegbare Begrenzungselement 7, also das Anlageelement 21 zusammen mit dem Formteil 22 also auch während des Anschmelzens relativ beweglich zu dem betrefflichen Profilteil 2 und zu dem Heizelement 36.

Bei dem in Figur 4 erkennbaren Zustand ist das Schmelzende dargestellt, bei welchem die Profilteile 2 genügend aufgeschmolzen sind. Dabei wurden die Begrenzungselemente 7, also das Anlageelement 21 zusammen mit dem Formteil 22 entsprechend dem Schmelzweg aus der Arbeitsposition in Richtung zur Anschlagwand 13 zurückbewegt. Allerdings verblieben die Anlageflächen 28 der Formteile 22 beim Anschmelzen bis zum Schmelzende stets in Kontakt mit der jeweiligen Heizfläche 34, was auch bei dem in Figur 4 erkennbaren Schmelzende der Fall ist. Die Stirnseite 17 ist jedoch jeweils beabstandet zur Stirnseite 16 des Basisschenkels 14.

So wird das Fließen des Schmelzgutes bei dem Anschmelzen vorteilhaft kontrolliert, also in Richtung zur Profiloberfläche 9, welche eine Außenansichtsfläche darstellt vermieden.

Nach dem Anschmelzen erfolgt das Umstellen zum Stauchen. Dabei besteht die Gefahr, dass das Schmelzgut in Richtung zur Profiloberfläche 9 fließt, sprich nach außen tritt. Ein solches Fließen wird mit der Erfindung dadurch vermieden, indem das Formteil 22 in Richtung zur Arbeitsposition bewegt wird und mit seiner Basisfläche 23 die angeschmolzene freie Stirnkante 4 des jeweiligen Profilteils 2, also den Schweißbereich so überragt, dass eine Halteebene 37 gebildet ist, was in Figur 5 dargestellt ist. In dieser Position ist das Formteil 22 mit seiner Oberfläche 18 von der Basisschenkeloberfläche 19 beabstandet, also quasi abgehoben.

In Figur 5 ist ein Umstellen von dem Schmelzen zu einem Stauchen ersichtlich, wobei das Heizelement noch zwischen den angeschmolzenen Profilteilen 2 angeordnet ist. Bei dem in Figur 5 dargestellten Ausführungsbeispiel ist das Formteil 22 relativ zum Anlageelement 21 entlang der korrespondierenden Basisfläche 23 in der Zeichnungsebene schräg nach oben verschoben, so dass eine geneigte Haltebene 37 gebildet ist. Möglich ist aber auch, dass Anlageelement 21 zusammen mit dem Formteil 22 in Richtung zur Arbeitsposition zu bewegen, so dass die Oberfläche 8 des Anlageelementes 22, also des Begrenzungselementes 7, die Haltebene 37 bildet, welche dann Niveaugleich zur Profiloberfläche 9 wäre.

Mit beiden Vorgehensweisen ist eine Kontrolle des Schmelzgutes erreichbar, wobei die geneigte Halteebene 37 auch einen Tropfschutz bewirken kann.

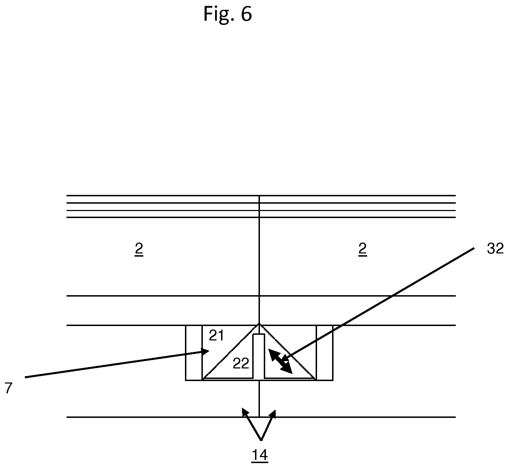

Nach dem Umstellen erfolgt das Stauchen, was in Figur 6 dargestellt ist. Dabei werden beide Profilteile 2 mit ihren angeschmolzenen Stirnkanten 4 aufeinander zubewegt, also aneinander gedrückt. Ersichtlich ist, dass die erfindungsgemäßen Begrenzungselemente 7 diese Bewegung entsprechend ausführen. Dabei werden die Anlageflächen 28 der Formteile 22 mit fortschreitender Bewegung der Profilteile 2 mit einander in Kontakt gebracht, wobei die dann aneinander liegenden Anlageflächen 28 bis zum Ende des Stauchvorganges in Kontakt verbleiben, so dass ein Fließen des Schmelzgutes kontrolliert ist.

Möglich ist, die Formteile 22 entsprechend dem Stauchweg zurückzubewegen, so dass das Schmelzgut zunächst eben, also niveaugleich zur Profiloberfläche 9 ausgeführt ist. Mit dem Zurückbewegen des Formteils 22 erfolgt die entsprechende Bewegung des Anlageelementes 21.

Die beiden Profilteile 2 werden in bevorzugter Weise soweit aufeinander zu bewegt, also gestaucht, bis die Basisschenkel 14 mit ihrer Stirnseite 16 aneinander liegen. Die Stirnseiten 17 des jeweiligen Begrenzungselementes 7, also auch des Formteils 22 sind zu der Stirnseite 16 in das Innere der Aufnahme 11 versetzt. Gleichwohl liegen die Anlageflächen 28 aneinander.

Ist der Stauchvorgang beendet, kann das Formteil 22 wieder entlang der Basisfläche 23 in Richtung zum Schmelzgut bewegt werden (Figur 6, Doppelpfeil 32), so dass die aneinander liegenden Formteile 22 mit ihrer Profilierung 26 eine entsprechende Nut in dem Schmelzgut erzeugen. In Figur 6 ist dieser Zustand erkennbar, indem das Formteil 22 mit seiner zur Basisschenkeloberfläche 19 orientierten Oberfläche 18 leicht angehoben ist.

Mit der Erfindung ist eine Nachbearbeitung hinsichtlich des bisher erforderlichen Entfernens der eigentlich an der Profiloberfläche 9 angeordneten Schweißraupe hinfällig, da diese mit der Erfindung vorteilhaft vermieden wird. Zudem kann zugleich mit dem Herstellen der Profilverbindung eine Nut in das Schmelzgut eingeprägt werden, so dass auch diesbezüglich Nachbearbeitungen wenn nicht vollständig, so doch zumindest in erheblichem Umfang entfallen können. Lediglich eventuell vorhandene Grate könnten zu entfernen sein. Auch die Taktzeitersparnis zur Herstellung der Tür- oder Fensterrahmen ist beachtlich.

**Bezugszeichenliste**

| | | | |
|---|---|---|---|
| 1 | Vorrichtung zum Verbinden von Kunststoffprofilteilen | 29 | Doppelpfeil |
| 2 | Kunststoffprofilteil | 30 | |
| 3 | Profilträger | 31 | Doppelpfeil |
| 4 | Stirnkante von 4 | 32 | Doppelpfeil |
| 5 | | 33 | Profilanschlag |
| 6 | Gehrungsschnitt | 34 | Heizfläche |
| 7 | Begrenzungselement | 35 | |
| 8 | Oberfläche von 7 | 36 | Heizelement |
| 9 | Profiloberfläche von 2 | 37 | Halteebene |
| 10 | | | |
| 11 | Aufnahme | | |
| 12 | Stirnseite von 3 | | |
| 13 | Anschlagwand | | |
| 14 | Basisschenkel von 11 | | |
| 15 | | | |
| 16 | Stirnseite von 14 | | |
| 17 | Stirnseite von 7 | | |
| 18 | Oberfläche von 7 | | |
| 19 | Basisschenkeloberfläche | | |
| 20 | | | |
| 21 | Anlageelement | | |
| 22 | Formteil | | |
| 23 | Basisfläche von 21 | | |
| 24 | Grundfläche von 22 | | |
| 25 | | | |
| 26 | Profilierung von 22 | | |
| 27 | Vorsprung | | |
| 28 | Anlagefläche von 22 | | |

## Patentansprüche

1. Verfahren zum Verbinden von Kunststoffprofilteilen (2), wobei wenigstens ein Profilteil (2) und eine Heizfläche (34) eines Heizelementes (36) in einer Fügerichtung miteinander in Kontakt gebracht werden, um das wenigstens eine Profilteil (2) in seinem Schweißbereich vor einem Zusammenfügen mit dem anderen Profilteil (2) anzuschmelzen, wobei ein Begrenzungselement (7) vorgesehen ist, mit dem ein Fließen und Verformen des Schmelzgutes kontrollierbar ist, wobei das Begrenzungselement (7) zumindest ein Anlageelement (21) und ein Formteil (22) aufweist, welche sowohl zueinander als auch zu dem Profilteil (2) bewegbar sind, wobei das Anlageelement (21) zusammen mit dem Formteil (22) bei einem Abschmelzen des zumindest einen Profilteils (2) aus einer Ruheposition in Richtung zu einer Arbeitsposition relativ zu dem zumindest einen Profilteil (2) und dem Heizelement (36) bewegt wird, wobei zumindest das Formteil (22) zumindest bei dem Abschmelzen in Kontakt mit der Heizfläche (34) des Heizelementes (36) und das Anlageelement (21) in Kontakt zu einer Profiloberfläche (9) gehalten wird, **dadurch gekennzeichnet, dass** das relativ bewegliche Anlageelement (21) zusammen mit dem Formteil (22) bei einem Umstellen von einem Schmelzen zum Stauchen so in Richtung zur Arbeitsposition bewegt wird, dass das Begrenzungselement (7) eine freie Stirnkante (4) des zumindest einen Profilteils (2) überragt, so dass eine Halteebene (37) gebildet ist.

2. Verfahren nach Anspruch 1, **dadurch gekennzeichnet, dass** das Anlageelement (21) zusammen mit dem Formteil (22) zumindest in einer Horizontalrichtung, also zumindest parallel zu der Profiloberfläche (9) des zumindest einen Profilteils (2) bewegt wird.

3. Verfahren nach Anspruch 1 oder 2, **dadurch gekennzeichnet, dass** das zumindest eine Profilteil (2) bei einem Einrichten in Kontakt mit einem Profilanschlag (33) gebracht wird, wobei das relativ bewegliche Anlageelement (21) zusammen mit dem Formteil (22) horizontal in seine Arbeitsposition bewegt und in Kontakt mit dem Profilanschlag (33) gebracht wird.

4. Verfahren nach einem der vorhergehenden Ansprüche, **dadurch gekennzeichnet, dass** das zumindest eine Profilteil (2) vor einem Schmelzbeginn in Kontakt mit der Heizfläche (34) des Heizelementes (36) gebracht wird, wobei das relativ bewegliche Anlageelement (21) zusammen mit dem Formteil (22) horizontal in seine Arbeitsposition bewegt und in Kontakt mit der Heizfläche (34) gebracht wird.

5. Verfahren nach einem der vorhergehenden Ansprüche, **dadurch gekennzeichnet, dass** das relativ bewegliche Anlageelement (21) zusammen mit dem Formteil (22) bei dem Abschmelzen des zumindest einen Profilteils (2) entsprechend einem Schmelzweg aus der Arbeitsposition zurück in Richtung zur Ruheposition bewegt wird, wobei zumindest das relativ bewegliche Formteil (22) des Begrenzungselements (7) in Kontakt mit der Heizfläche (34) des Heizelementes (36) verbleibt.

6. Verfahren nach einem der vorhergehenden Ansprüche, **dadurch gekennzeichnet, dass** das relativ bewegliche Anlageelement (21) zusammen mit dem Formteil (22) mit Beginn eines Stauchens zunächst in der Arbeitsposition verbleibt, und mit fortschreitendem Stauchweg entsprechend bewegt wird.

7. Verfahren nach einem der vorhergehenden Ansprüche, **dadurch gekennzeichnet, dass** der Schweißbereich nach der Verbindung mit dem anderen Profilteil (2) profiliert wird, indem das Formteil (22) des Begrenzungselementes (7) relativ zu dem Anlageelement (21) in Richtung zum Schweißbereich verschoben wird.

8. Verfahren nach einem der vorhergehenden Ansprüche, **dadurch gekennzeichnet, dass** das relativ bewegbare Begrenzungselement (7) mit seinem Anlageelement (21) zusammen mit dem Formteil (22) in einer in einem Profilträger (3) angeordneten Aufnahme (11) relativ beweglich aufgenommen ist.

9. Vorrichtung zum Verbinden von Kunststoffprofilteilen (2), insbesondere eingerichtet zur Durchführung des Verfahrens nach einem der vorhergehenden Ansprüche, wobei wenigstens ein Profilteil (2) und eine Heizfläche (34) eines Heizelementes (36) in einer Fügerichtung miteinander in Kontakt bringbar sind, um das wenigstens eine Profilteil (2) in seinem Schweißbereich vor einem Zusammenfügen mit dem anderen Profilteil (2) anzuschmelzen, wobei ein Begrenzungselement (7) vorgesehen ist, mit dem ein Fließen und Verformen des Schmelzgutes kontrollierbar ist, wobei das Begrenzungselement (7) ein Anlageelement (21) und ein Formteil (22) aufweist, welche sowohl zueinander als auch zu dem Profilteil (2) relativ bewegbar sind, wobei das bewegliche Anlageelement (21) zusammen mit dem Formteil (22) zumindest bei einem Abschmelzen des zumindest einen Profilteils (2) aus einer Ruheposition in Richtung zu einer Arbeitsposition relativ zu dem zumindest einen Profilteil (2) und dem Heizelement (36) bewegbar ist, wobei zumindest das Formteil (22) zumindest bei dem Abschmelzen in Kontakt mit der Heizfläche (34) des Heizelementes (36) und das Anlageelement (21) mit einer Profiloberfläche (9) in Kontakt steht, **dadurch gekennzeichnet, dass** das relativ bewegliche Anlageelement (21) zusammen mit dem Formteil (22) bei einem Umstellen des wenigstens einen Profilteils (2) von einem Schmelzen zum Stauchen so in Richtung zur Arbeitsposition bewegbar ist, dass das Begrenzungselement (7) eine freie Stirnkante (4) des zumindest einen Profilteils (2) überragt, so dass eine Halteebene (37) gebildet ist.

10. Vorrichtung nach Anspruch 9, **dadurch gekennzeichnet, dass** das Begrenzungselement (7) in einer in einem Profilträger (3) angeordneten Aufnahme (11) aufgenommen ist, welche in Richtung zu einer Stirnseite geöffnet ist, und dazu gegenüberliegend eine Anschlagwand (13) aufweist, von dem sich ein Basisschenkel (14) in Richtung zur Stirnseite (16) weg erstreckt, wobei das Anlageelement (21) mit seiner Oberfläche (8) an der Profiloberfläche (9) und wobei das Formteil (22) mit seiner dazu gegenüberliegenden Oberfläche (18) an einer Basisschenkeloberfläche (19) anliegt.

11. Vorrichtung nach einem der Ansprüche 9 oder 10, **dadurch gekennzeichnet, dass** das Formteil (22) an seiner Stirnseite (17) einen Vorsprung (27) aufweist.

12. Vorrichtung nach einem der Ansprüche 9 bis 11, **dadurch gekennzeichnet, dass** das Formteil (22) an seiner Stirnseite (17) eine Profilierung (26) aufweist.

## Claims

1. Method for connecting plastic profile parts (2), wherein at least one profile part (2) and one heating surface (34) of a heating element (36) are brought into contact with each other in a joining direction to melt the at least one profile part (2) in its welding area before it is joined with the other profile part (2), wherein a limiting element (7) is provided by means of which flowing and deformation of the molten material can be controlled, wherein the limiting element (7) has at least one abutment element (21) and one forming part (22) which are movable with respect to each other as well as with respect to the profile part (2), wherein, as the at least one profile part (2) is being molten, the abutment element (21) including the forming part (22) is moved relative to the at least one profile part (2) and the heating element (36) from a resting position in the direction towards a working position, wherein at least during melting at least the forming part (22) is held in contact with the heating surface (34) of the heating element (36) and the abutment element (21) is held in contact with a profile surface (9), **characterized in that**, as the shift from melting to shrinking occurs, the relatively movable abutment element (21) including the forming part (22) is moved in such a manner in the direction towards the working position that the limiting element (7) juts out beyond a free front edge (4) of the at least one profile part (2), so that a holding plane (37) is formed.

2. Method according to claim 1, **characterized in that** the abutment element (21) including the forming part (22) is moved at least in a horizontal direction, that is, at least in parallel to the profile surface (9) of the at least one profile part (2).

3. Method according to claim 1 or 2, **characterized in that** during set-up the at least one profile part (2) is brought into contact with a profile stop (33), wherein the relatively movable abutment element (21) including the forming part (22) is moved horizontally into its working position and is brought into contact with the profile stop (33).

4. Method according to any of the preceding claims, **characterized in that**, before onset of melting, the at least one profile part (2) is brought into contact with the heating surface (34) of the heating element (36), wherein the relatively movable abutment element (21) including the forming part (22) is moved horizontally into its working position and is brought into contact with the heating surface (34).

5. Method according to any of the preceding claims, **characterized in that**, as the at least one profile part (2) is being molten, the relatively movable abutment element (21) including the forming part (22) is moved corresponding to a melting path from the working position back in the direction towards the resting position, wherein at least the relatively movable forming part (22) of the limiting element (7) remains in contact with the heating surface (34) of the heating element (36).

6. Method according to any of the preceding claims, **characterized in that** the relatively movable abutment element (21) including the forming part (22) at first remains in the working position as shrinking begins, and is moved correspondingly as the shrinking path progresses.

7. Method according to any of the preceding claims, **characterized in that** the welding area is profiled after having been connected to the other profile part (2) by displacing the forming part (22) of the limiting element (7) relative to the abutment element (21) in the direction towards the welding area.

8. Method according to any of the preceding claims, **characterized in that** the relatively movable limiting element (7) including the forming part (22) is received with its abutment element (21) in a relatively movable manner inside a reception area (11) that is arranged in the profiled support (3).

9. Device for connecting plastic profile parts (2), in particular configured for performing the method according to any of the preceding claims, wherein at least one profile part (2) and one heating surface (34) of a heating element (36) can be brought into contact with each other in a joining direction to melt the at least one profile part (2) in its welding area before it is joined with the other profile part (2), wherein a limiting element (7) is provided by means of which flowing and deformation of the molten material can be controlled, wherein the limiting element (7) has an abutment element (21) and a forming part (22) which can be moved relative to each other as well as relative to the profile part (2), wherein, at least as the at least one profile part (2) is being molten, the movable abutment element (21) including the forming part (22) can be moved relative to the at least one profile part (2) and the heating element (36) from a resting position in the direction towards a working position, wherein at least during melting at least the forming part (22) is in contact with the heating surface (34) of the heating element (36) and the abutment element (21) is in contact with a profile surface (9), **characterized in that**, as the shift from melting to shrinking occurs in the at least one profile part (2), the relatively movable abutment element (21) including the forming part (22) can be moved in such a manner in the direction towards the working position that the limiting element (7) juts out beyond a free front edge (4) of the at least one profile part (2), so that a holding plane (37) is formed.

10. Device according to claim 9, **characterized in that** the limiting element (7) is received inside a reception area (11) that is arranged in a profiled support (3) and is open in the direction towards a front face, and that has a stop wall (13) opposite thereto, with a base leg (14) extending away from the same in the direction towards front face (16), wherein the abutment element (21) abuts at the profile surface (9) with its surface (8) and wherein, with its surface (18) that is opposite thereto, the forming part (22) abuts a base leg surface (19).

11. Device according to any of the claims 9 or 10, **characterized in that** the forming part (22) has a projection (27) at its front face (17).

12. Device according to any of the claims 9 to 11, **characterized in that** the forming part (22) has a profiling (26) at its front face (17).

## Revendications

1. Procédé, destiné à relier des pièces de profilés en matière plastique (2), au moins une pièce de profilé (2) et une surface chauffante (34) d'un élément chauffant (36) étant amenées en contact mutuel dans une direction d'assemblage, pour faire fondre l'au moins une pièce de profilé (2) dans sa zone de soudage avant un assemblage avec l'autre pièce de profilé (2), un élément de limitation (7) étant prévu, à l'aide duquel un écoulement et un façonnage du produit fondu sont contrôlables, l'élément de limitation (7) comportant au moins un élément d'appui (21) et une pièce de moulage (22), lesquels sont mobiles aussi bien l'un par rapport à l'autre que vers la pièce de profilé (2), lors d'une fonte de l'au moins une pièce de profilé (2), l'élément d'appui (21) en commun avec la pièce de moulage (22) étant déplacé d'une position de repos dans la direction d'une position de travail par rapport à l'au moins une pièce de profilé (2) et à l'élément chauffant (36), au moins pendant la fonte, au moins la pièce de moulage (22) étant maintenue en contact avec la surface chauffante (34) de l'élément chauffant (36) et l'élément d'appui (21) étant maintenu en contact avec la surface du profilé (9), **caractérisé en ce que** lors d'un passage d'une fonte à un refoulement, l'élément d'appui (21) relativement mobile, en commun avec la pièce de moulage (22) est déplacé dans la direction de la position de travail, de telle sorte que l'élément de limitation (7) saillisse par-dessus une arête frontale (4) libre de l'au moins une pièce de profilé (2), de sorte à former un plan de retenue (37).

2. Procédé selon la revendication 1, **caractérisé en ce que** l'élément d'appui (21) en commun avec la pièce de moulage (22) est déplacé au moins dans une direction horizontale, donc au moins à la parallèle de la surface du profilé (9) de l'au moins une pièce de profilé (2).

3. Procédé selon la revendication 1 ou 2, **caractérisé en ce que** lors d'une mise en place, l'au moins une pièce de profilé (2) est amenée en contact avec une butée de profilé (33), l'élément d'appui (21) relativement mobile, en commun avec la pièce de moulage (22) étant déplacé à l'horizontale dans sa position de travail et amené en contact avec la butée de profilé (33).

4. Procédé selon l'une quelconque des revendications précédentes, **caractérisé en ce qu'**avant un début de la fusion, l'au moins une pièce de profilé (2) est amenée en contact avec la surface chauffante (34) de l'élément chauffant (36), l'élément d'appui (21) relativement mobile, en commun avec la pièce de moulage (22) étant déplacé à l'horizontale dans sa position de travail et amené en contact avec la surface chauffante (34).

5. Procédé selon l'une quelconque des revendications précédentes, **caractérisé en ce que** lors de la fonte de l'au moins une pièce de profilé (2), l'élément d'appui (21) relativement mobile, en commun avec la pièce de moulage (22) est déplacé en fonction d'un trajet de fusion de la position de travail, à nouveau en direction de la position de repos, au moins la pièce de moulage (22) relativement mobile de l'élément de limitation (7) restant en contact avec la surface chauffante (34) de l'élément chauffant (36).

6. Procédé selon l'une quelconque des revendications précédentes, **caractérisé en ce qu'**au début d'un refoulement, l'élément d'appui (21) relativement mobile, en commun avec la pièce de moulage (22) reste d'abord dans la position de travail et au fur et à mesure du trajet de refoulement, est déplacé en conséquence.

7. Procédé selon l'une quelconque des revendications précédentes, **caractérisé en ce que** qu'après l'assemblage avec l'autre pièce de profilé (2) la zone de soudage est profilée, **en ce que** la pièce de moulage (22) de l'élément de limitation (7) est déplacée par rapport à l'élément d'appui (21) dans la direction de la zone de soudage.

8. Procédé selon l'une quelconque des revendications précédentes, **caractérisé en ce que** par son élément d'appui (21), l'élément de limitation (7) relativement mobile, en commun avec la pièce de moulage (22) est réceptionné de manière relativement mobile dans un logement (11) placé dans un support de profilé (3).

9. Dispositif, destiné à relier des pièces de profilés en matière plastique (2), aménagé notamment pour la réalisation du procédé selon l'une quelconque des revendications précédentes, au moins une pièce de profilé (2) et une surface chauffante (34) d'un élément chauffant (36) pouvant être amenés en contact mutuel dans une direction d'assemblage, pour faire fondre l'au moins une pièce de profilé (2) dans sa zone de soudage avant un assemblage avec l'autre pièce de profilé (2), un élément de limitation (7) étant prévu, à l'aide duquel un écoulement et un façonnage du produit fondu sont contrôlables, l'élément de limitation (7) comportant un élément d'appui (21) et une pièce de moulage (22), lesquels sont mobiles aussi bien l'un par rapport à l'autre que vers la pièce de profilé (2), lors d'une fonte de l'au moins une pièce de profilé (2), l'élément d'appui (21) en commun avec la pièce de moulage (22) étant déplacé d'une position de repos dans la direction d'une position de travail par rapport à l'au moins une pièce de profilé (2) et à l'élément chauffant (36), au moins pendant la fonte, au moins la pièce de moulage (22) étant maintenue en contact avec la surface chauffante (34) de l'élément chauffant (36) et l'élément d'appui (21) étant maintenu en contact avec la surface du profilé (9), **caractérisé en ce que** lors d'un passage de l'au moins une pièce de profilé (2) d'une fonte à un refoulement, l'élément d'appui (21) relativement mobile, en commun avec la pièce de moulage (22) est déplacé dans la direction de la position de travail, de telle sorte que l'élément de limitation (7) saillisse par-dessus une arête frontale (4) libre de l'au moins une pièce de profilé (2), de sorte à former un plan de retenue (37).

10. Dispositif selon la revendication 9, **caractérisé en ce que** l'élément de limitation (7) est réceptionné dans un logement (11) placé dans un support de profilé (3), lequel est ouvert dans la direction d'une face frontale, et comporte au vis-à-vis de celle-ci une paroi de butée (13) à partir de laquelle une branche de base (14) s'étend dans la direction de la face frontale (16), par sa surface (8), l'élément d'appui (21) étant adjacent à la surface du profilé (9) et par sa surface (18) au vis-à-vis de celle-ci, la pièce de moulage (22) étant adjacente à une surface de la branche de base (19).

11. Dispositif selon l'une quelconque des revendications 9 ou 10, **caractérisé en ce que** sur sa face frontale (17), la pièce de moulage (22) comporte une saillie (27).

12. Dispositif selon l'une quelconque des revendications 9 à 11, **caractérisé en ce que** sur sa face frontale (17), la pièce de moulage (22) comporte un profilage (26).
